# FASCICULE DE BREVET EUROPEEN

(11) **EP 0 976 507 B1**
(45) Date de publication et mention de la délivrance du brevet: **23.04.2003**
(21) Numéro de dépôt: 99490018.1
(22) Date de dépôt: 01.07.1999
(51) Int. Cl.: B25H 1/00, F16M 11/16

(54) **Support repliable de bicyclette**
Zusammenklappbarer Fahrradständer
Collapsible bicycle stand

(30) Priorité: 28.07.1998 FR 9809804
(43) Date de publication de la demande: 02.02.2000
(73) Titulaire: DECATHLON, 59650 Villeneuve d'Ascq (FR)
(72) Inventeur: Bouvier, Jean-Christophe, 59130 Lambersart (FR); Broutin, Dominique, 59710 Avelin (FR)
(74) Mandataire: Hennion, Jean-Claude

(56) Documents cités:
- EP-A- 0 597 150
- FR-A- 2 711 109
- US-A- 3 981 491
- US-A- 5 390 885

## Description

La présente invention concerne un support de bicyclette spécialement conçu pour le montage, l'entretien ou la réparation d'une bicyclette par un opérateur, qui soit facilement repliable et qui ait une présentation compacte dans sa forme repliée.

On connaît déjà différents types de support de bicyclette.

En particulier dans le document FR.2.711.109, le support comporte un pied en croix fait d'au moins trois croisillons, un tube vertical fixé par son extrémité inférieure sur le pied en croix et sur l'extrémité supérieure duquel est prévu un appui pour le boîtier de pédalier de la bicyclette et un tube télescopique partant de cet appui et s'étendant obliquement vers le haut pour servir de support pour le tube diagonal du cadre. Un moyen de fixation est prévu pour bloquer en position le tube diagonal du cadre sur le tube oblique. Ce support comprend également un second tube oblique et coudé servant au blocage en position du guidon.

Dans ce document, concernant l'encombrement de ce support, il est simplement indiqué qu'il est facile à stocker ou à expédier par voie postale parce que les différents tubes télescopiques sont aisément détachables et peuvent être facilement envoyés sous la forme d'un paquet de pièces détachées.

L'objectif de replier un support de bicyclette a déjà été abordé dans le document EP.597.150. Le support repliable dont il est question dans ce document comporte également un pied et une tige verticale à l'extrémité supérieure de laquelle est fixée une barre support comportant au moins deux moyens de fixation pour l'un des tubes du cadre , ce support ne comporte pas de pièce d'appui pour le boîtier de pédalier. Lors du repliage sur lui-même, la barre support équipée de ces deux moyens de fixation pivote de manière à se retrouver parallèle au tube vertical. S'agissant du pied assurant la stabilité du support , ce document fait référence à un support connu, illustré à la figure 13 dudit document EP.597.150, dans lequel le pied proprement dit est constitué de trois bras formant un tripode relié à l'extrémité inférieure du tube vertical bien au-dessus du sol. Cette disposition rendrait , selon les indications données dans ce document, le support plutôt instable et ne serait pas adéquat pour une utilisation longue durée du support. Ce document EP.597.150 préconise une paire de pieds connectés à la partie inférieure du tube vertical, ces pieds pouvant être déplacés par pivotement entre une première position dans laquelle ils sont déployés dans des directions opposées par rapport auxdits tubes et parallèles au sol lorsque le support est en service et une seconde position dans laquelle les pieds sont repliés parallèles au mât lorsque le support n'est pas en service.

Le but que s'est fixé le demandeur est de proposer un autre mode de réalisation que celui décrit dans le document EP.597.150 d'un support de bicyclette repliable facilement et qui puisse se présenter sous une forme compacte à l'état replié.

Ce but est parfaitement atteint par le support de l'invention qui de manière connue par le document FR.2.711.109 comporte un pied et une barre support dont l'extrémité inférieure est solidaire dudit pied et qui présente des zones d'appui pour le boîtier de pédalier de la bicyclette et pour le tube diagonal du cadre.

De manière caractéristique selon l'invention, le pied est un trépied formé d'un pied principal, surmonté d'une tête, et de deux pieds secondaires, montés pivotants par rapport à ladite tête entre une première position déployée où les trois pieds forment le trépied et une seconde position repliée où les deux pieds secondaires sont sensiblement parallèles au pied principal ; de plus le pied principal et la barre support sont sensiblement dans un même plan ; enfin le support comporte une pièce d'articulation apte à faire pivoter la barre support par rapport à un axe perpendiculaire audit plan, ladite pièce étant fixée à proximité immédiate et au-dessus de la tête du trépied.

Certes dans le document FR.2.711.109, il était question de prévoir, dans le tube vertical, une articulation, voire une rotule, rendant possible un basculement de la bicyclette autour d'un axe horizontal afin d'adapter la position de la bicyclette aux nécessités du travail. Cependant la disposition de cette articulation, schématisée sur les figures de ce document, font clairement apparaître qu'il ne pourrait être question , comme c'est le cas ici, de mettre à profit cette pièce d'articulation pour obtenir un support repliable de grande compacité. C'est la proximité immédiate de la pièce d'articulation par rapport à la tête du trépied et le fait que cette articulation permette un pivotement par rapport à l'axe horizontal perpendiculaire au plan passant par la barre support et le pied principal qui permet d'obtenir le repliage adéquat selon l'invention.

Dans une variante préférée de réalisation, la tête du trépied comporte une face sensiblement plane qui est opposée au pied principal et parallèle à la direction générale dudit pied. Cette disposition particulière présente l'avantage de pouvoir utiliser le support de l'invention alors que le trépied est en position repliée. Bien sûr on comprend que pour une telle utilisation il faille retirer les roues de la bicyclette . Dans ce cas, les deux extrémités libres de la fourche viennent se placer de part et d'autre des deux pieds secondaires et permettent la stabilité du support avec, comme autre appui au sols la face sensiblement plane de la tête du trépied. Cette utilisation est particulièrement intéressante lorsque l'on veut transporter la bicyclette et son support dans une housse. La présence du support assure un bon maintien vertical de la bicyclette lors de son transport et évite le contact du pédalier et du dérailleur avec le sol.

Avantageusement la tête du trépied est une pièce dont la section, perpendiculairement à la direction générale du pied principal, est triangulaire, ladite pièce comportant ainsi trois faces latérales ; le pied principal est disposé selon l'une des arêtes du triangle et les axes de pivotement des deux pieds secondaires sont disposés perpendiculairement aux deux faces latérales adjacentes au pied principal.

Selon cette variante, c'est la troisième face, opposée au pied principal qui constitue la face d'appui sur le sol du trépied en position repliée.

Avantageusement la pièce d'articulation comporte deux mâchoires dont la périphérie est circulaire et dentelée , les dents de l'une venant s'imbriquer dans les dents de l'autre lors du rapprochement des deux mâchoires la première mâchoire est fixée sur la tête du trépied et la seconde mâchoire est solidaire de l'extrémité inférieure de la barre support. Avantageusement l'extrémité inférieure de la barre support est munie d'une tige filetée traversant les deux mâchoires de la pièce d'articulation, ladite tige filetée coopérant avec un écrou de serrage des deux mâchoires.

La présente invention sera mieux comprise à la lecture de la description qui va être faite d'un exemple préféré de réalisation d'un support repliable pour bicyclette , illustré par le dessin annexé dans lequel:
- La figure 1 est une représentation en perspective du support à l'état déployé,
- La figure 2 est une représentation en perspective du support à l'état replié, allongé sur le sol,

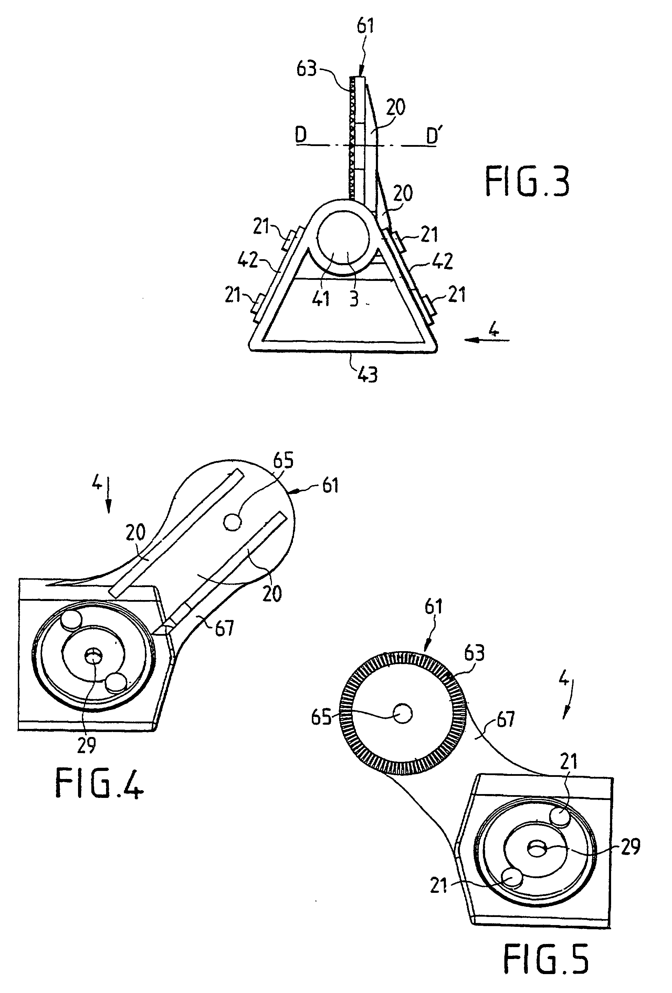

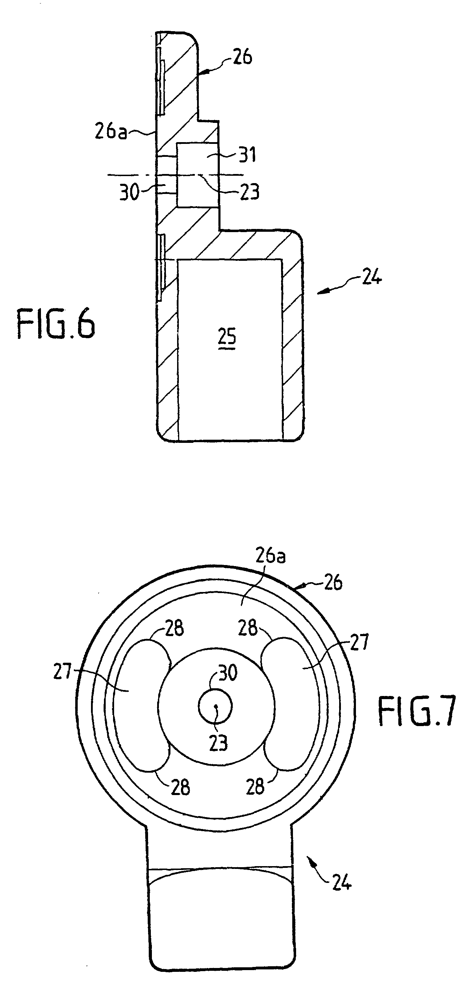

- Les figures 3,4 et 5 sont des représentations schématiques respectivement en section transversale (figure 3) et des deux côtés (figures 4 et 5) de la tête du trépied et
- Les figues 6 et 7 sont des représentations schématiques respectivement en coupe transversale (figure 6) et de face (figure 7) de l'embout de pivotement d'un pied secondaire.

Le support 1 est constitué des éléments suivants :
- un trépied 2 lui-même composé d'un pied principal 3 surmonté d'une tête 4 et de deux pieds secondaires 5, montés pivotants par rapport à la tête 4,
- une pièce d'articulation 6 qui est fixée sur la tête 4 du trépied 2,
- une barre support 7, coudée, dont une extrémité dite inférieure 7a est solidarisée à la pièce d'articulation 6,
- deux appuis 8, 9 pour le cadre de la bicyclette, le premier appui 8 étant disposé sur la barre support 7 au niveau de la portion coudée 10 pour accueillir le boîtier de pédalier et le second appui 9 étant disposé vers l'extrémité 7b de la barre support 7,
- un organe 11 de blocage en position du tube diagonal du cadre de la bicyclette contre la barre support 7 lorsque la bicyclette est en position sur le support,
- deux bras pivotants 12 fixés vers l'extrémité supérieure 7b de la barre support et destinés à venir se placer de part et d'autre de la roue de la bicyclette.

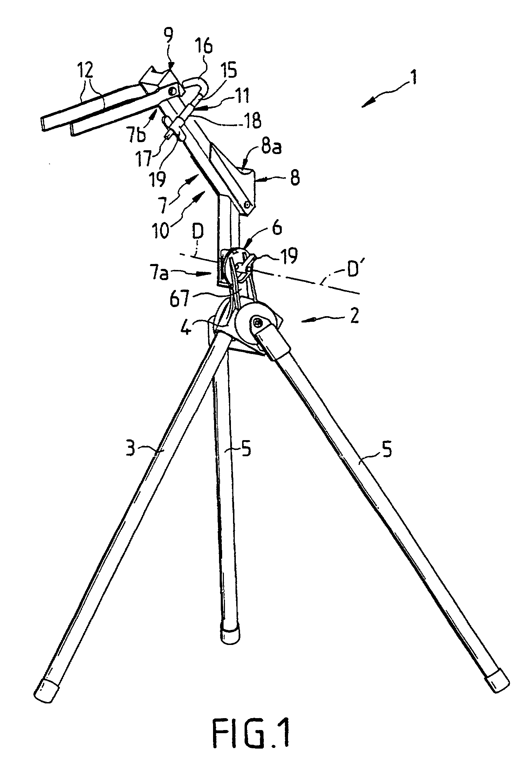

Sur la figure 1 on a représenté le support 1 dans la position normale où il accueille la bicyclette, le boîtier de pédalier étant disposé dans une zone courbe 8a du premier appui 8, tandis que le tube diagonal du cadre vient s'appliquer sur la seconde pièce d'appui 9, ladite pièce présentant deux ailes latérales obliques 13 et un fond 14 sur lesquels vient s'appliquer le tube diagonal du cadre. Ledit tube diagonal est bloqué en position grâce au moyen de fixation 11 qui, dans l'exemple illustré, est constitué d'une part par un crochet de serrage 15 dont l'extrémité 17 opposée à la partie coudée 16 est filetée, d'autre part par un tube creux 18 fixé sur la barre support 7 entre les deux appuis 8, 9 et enfin par un écrou à ailette 19 apte à coopérer avec la partie filetée 17 du crochet de serrage 15.

Les deux appuis 8, 9 et la partie coudée 16 du crochet de serrage 15 sont en matière plastique de manière à ne pas provoquer de rayure sur le cadre de la bicyclette.

Dans la position illustrée à la figure 1, la barre support 7 est disposée de telle sorte que l'extrémité inférieure 7a, ladite barre soit sensiblement verticale. Cependant grâce à la pièce d'articulation 6, il est possible de faire adopter à la barre support toute inclinaison souhaitable par rapport à l'axe DD' d'articulation. Cet axe DD' est perpendiculaire au plan vertical passant sensiblement par le pied principal 3 et la barre support 7.

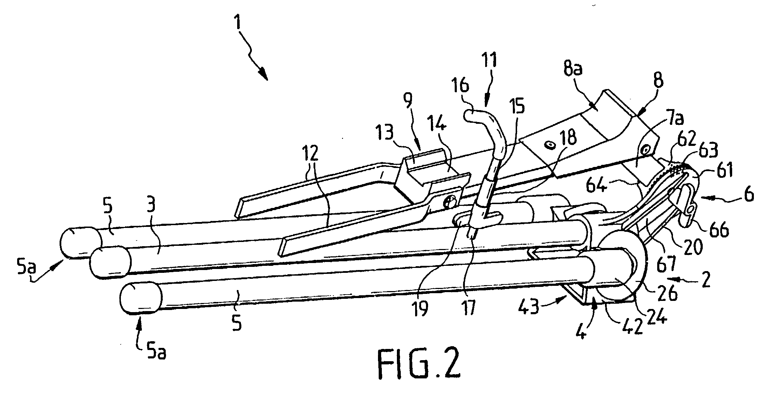

C'est grâce à cette disposition que peut être obtenu le repliage du support 1 conformément à la disposition qui est illustrée à la figure 2, la barre support 7 venant se placer le long du pied principal 3, tandis que les pieds secondaires 5 sont relevés et disposés sensiblement parallèles au pied principal 3.

La tête 4 du trépied 2 est une pièce dont la section transversale, prise perpendiculairement à la direction générale du pied principal 3, a une forme sensiblement triangulaire. Un logement 41 est prévu pour l'emmanchement du pied principal 3 dans la zone intérieure de l'angle au sommet du triangle. Sur chacune des deux faces 42, adjacentes au logement 41, est prévue une partie du système de pivotement d'un pied secondaire 5, ce pivotement se faisant selon un axe perpendiculaire à ladite face 42. La troisième face 43 de la tête 4 est plane et parallèle à la direction générale du pied principal 3 lorsque celui-ci se trouve dans son logement 41.

La tête 4 est surmontée de la pièce d'articulation 6, qui se trouve à proximité immédiate de ladite tête et est décalée obliquement par rapport à celle-ci de manière à ce que l'axe d'articulation DD' soit sensiblement dans le plan vertical passant par le centre de gravité du trépied 2. La pièce d'articulation 6 est composée de deux mâchoires annulaires dentelées 61, 62, dont les dents 63 sont configurées pour venir s'imbriquer parfaitement les unes dans les autres lors du rapprochement des deux mâchoires 61, 62, une fois que la position relative de celles-ci l'une par rapport à l'autre a été adoptée. Ce type d'articulation à mâchoire dentelée est généralement dénommé noix.

La première mâchoire 61 est fixée sur la tête 4 du trépied de telle sorte que ladite mâchoire 61 soit sensiblement dans le plan du pied principal 3 et de la barre support 7.

La seconde mâchoire 62 est fixée à l'extrémité inférieure 7a de la barre support 7.

Dans l'exemple illustrée cette seconde mâchoire 62 comporte, à l'opposée de ses dents 63, un rainurage 64 dans lequel vient s'encastrer l'extrémité 7a. Une tige filetée, non visible sur les figures, est fixée sur l'extrémité inférieure 7a de la barre support 7, traverse des trous centraux 65 pratiqués dans les mâchoires 61,62. Le blocage en position des deux mâchoires 61, 62 est assuré grâce à un écrou à ailette 66 venant coopérer avec la tige filetée fixée sur l'extrémité 7a de la barre support 7. Pour obtenir le pivotement adéquat de la barre support 7, il suffit de desserrer légèrement l'écrou à ailette 66 de manière à écarter l'une de l'autre les deux mâchoires 61 et 62, de déplacer angulairement la barre support 7 puis de resserrer l'écrou 66 en sorte que les dents 63 des deux mâchoires 61, 62 s'imbriquent les unes dans les autres.

L'angle entre la direction générale du pied principal et la direction générale de la jonction 67 entre la tête 4 et la première mâchoire 61 est de l'ordre de 135 °.

Cette jonction 67 comporte de préférence des ailes de renforcement 20.

Le système de pivotement des pieds secondaires 5 doit permettre le pivotement angulaire de ceux-ci par rapport aux faces 42 de la tête 4 du trépied entre deux positions extrêmes, correspondant pour la première à la position déployée illustrée à la figure 1 et pour la seconde à la position repliée illustrée à la figure 2. Pour obtenir ce déplacement angulaire précis, sont prévus sur chaque face 42 au moins un mais de préférence deux plots 21 qui dans l'exemple illustré sont diamétralement opposés par rapport à l'axe 23 de pivotement. Chaque pied secondaire 5 est terminé vers la tête 4 par un embout 24 comportant un logement 25 à l'intérieur duquel le pied secondaire 5 vient s'emmancher. Cet embout 24 comprend une portion supérieure 26 de forme circulaire dont la face 26a est destinée à venir en appui contre une face latérale 42 de la tête 4 du trépied 2. Dans cette face 26a sont creusées des lumières oblongues 27, symétriques par rapport à l'axe de pivotement 23. Lors du pivotement du pied secondaire 5, c'est-à-dire lors de la rotation de la portion supérieure circulaire 26 de l'embout 24, les plots 21 se déplacent à l'intérieur des lumières oblongues 27 jusqu'à venir en butée contre les bords extrêmes 28 desdites lumières 27.

Des trous centraux 29 et 30 sont pratiqués dans la face latérale 42 et dans la portion circulaire 26 au niveau de l'axe d'articulation 23. Une cavité 31 est prévue, face au trou central 30 de l'embout 24 pour servir de logement à la tête de la vis permettant de solidariser cet embout 24 sur la tête 4 du trépied 2 ; la tige de la vis passe à travers les trous centraux 30 et 29 tandis que l'écrou de serrage est à l'intérieur de la tête 4.

Pour éviter un pivotement intempestif des pieds secondaires 5 par rapport au pied principal 3 du trépied 2, on prévoit un système de freinage qui nécessite qu'une force déterminée soit exercée pour effectuer ce pivotement. Le principe de ce freinage est d'appliquer deux surfaces l'une contre l'autre, mettant ainsi en jeu des forces de frottement.

Dans la position repliée, telle qu'elle est illustrée à la figure 2 la troisième face 43, plane de la tête 4 vient en appui sur le sol de même que les extrémités 5a des deux pieds secondaires 5. Ces deux pieds 5 sont sensiblement parallèles au pied principal 3. Le support 1 de l'invention peut également être utilisé dans cette configuration, en particulier lorsque l'utilisateur veut placer sa bicyclette, démunie de ses roues, dans une housse ; l'ensemble ainsi constitué par la bicyclette, sans roue, par le support 1 à l'état replié, et par la housse, peut être transporté de manière relativement stable en se servant des trois appuis précités et également des extrémités inférieures de la fourche venant se placer de part et d'autre des deux pieds secondaires 5.

La présente invention n'est pas limitée au mode de réalisation qui a été décrit à titre d'exemple non exhaustif. En particulier, le système de mise en butée des deux pieds secondaires lors de l'ouverture du trépied peut être d'une structure simplifiée par rapport à ce qui a été décrit dans lequel il est intégré au niveau de la tête du trépied. Par exemple, on peut mettre en oeuvre soit un ensemble de tiges formant compas relié entre chaque pied secondaire et le pied principal, soit une réglette perforée avec possibilité de réglage de l'angle d'ouverture du trépied également reliée entre chaque pied secondaire et le pied principal.

S'agissant du moyen de fixation du tube diagonal du cadre sur la barre support, il peut s'agir d'un autre moyen que d'un crochet de serrage comme décrit précédemment ; par exemple s'agissant d'une bande élastique dont une extrémité est fixée sur la barre support et dont l'autre comporte une perforation, l'utilisateur encercle le tube diagonal à l'aide de la bande élastique et bloque celle-ci en position en faisant pénétrer la perforation sur un plot de fixation solidaire de la barre support. Dans une autre variante de réalisation, il s'agit d'une courroie non élastique et le blocage en position se fait par un système d'attache auto-aggripant, bien connu sous la dénomination Velcro.

## Revendications

1. Support de bicyclette comportant un pied et une barre support dont l'extrémité inférieure est solidaire dudit pied et qui présente des zones d'appui pour le boîtier de pédalier de la bicyclette et pour le tube diagonal du cadre, **caractérisé en ce que** le pied est un trépied (2) formé d'un pied principal (3), surmonté d'une tête (4), et de deux pieds secondaires (5), montés pivotants par rapport à ladite tête (4) entre une première position déployée de service et une seconde position repliée où les deux pieds secondaires (5) sont sensiblement parallèles au pied principal (3) ; **en ce que** le pied principal (3) et la barre support (7) sont sensiblement dans un même plan et **en ce qu'**il comporte une pièce d'articulation (6) apte à faire pivoter la barre support (7) par rapport à un axe (DD') perpendiculaire audit plan, ladite pièce (6) étant fixée à proximité immédiate et au-dessus de la tête (4) du trépied (2).

2. Support selon la revendication 1 **caractérisé en ce que** la tête (4) du trépied (2) comporte une face (43) sensiblement plane qui est opposée au pied principal (3) et parallèle à la direction générale dudit pied (3).

3. Support selon la revendication 2 **caractérisé en ce que** la tête (4) du trépied (2) est une pièce dont la section, perpendiculairement à la direction générale du pied principal (3), est triangulaire, ladite pièce comportant ainsi trois faces latérales (42, 43), **en ce que** le pied principal (3) est disposé selon l'une des arêtes du triangle et les axes de pivotement des deux pieds secondaires (5) sont disposés perpendiculairement aux deux faces latérales (42) adjacentes au pied principal (3).

4. Support selon l'une des revendications 1 à 3 **caractérisé en ce que** la pièce d'articulation (6) comporte deux mâchoires (61, 62) dont la périphérie est circulaire et dentelée, les dents (63) de l'une (61) venant s'imbriquer dans les dents (63) de l'autre (62) lors du rapprochement des deux mâchoires (61, 62), **en ce que**, la première mâchoire (61) est fixée sur la tête (4) du trépied (2) et la seconde mâchoire (62) est solidaire de l'extrémité inférieure (7a) de la barre support (7).

5. Support selon la revendication 4 **caractérisé en ce que** l'extrémité inférieure (7a) de la barre support (7) est munie d'une tige filetée traversant les deux mâchoires (61, 62) de la pièce d'articulation (6), ladite tige filetée coopérant avec un écrou de serrage (67) des deux mâchoires.

6. Support selon la revendication 3 **caractérisé en ce que** chacune des deux faces latérales (42) de la tête (4) du trépied (2) est munie d'au moins un plot (21), **en ce que** chaque pied secondaire (5) est terminé par une portion circulaire (26) dont la face 26a, destinée à venir en appui sur une desdites faces latérales (42), est creusée d'au moins une lumière oblongue (27) dans laquelle peut se déplacer ledit plot (21) jusqu'à venir en butée contre les bords extrêmes (28) desdites lumières (27).

## Claims

1. Bicycle support comprising a stand and a support bar, the lower end of which is integral with said stand and which has support regions for the casing of the pedal and gear mechanism of the bicycle and for the diagonal tube of the frame, **characterised in that** the stand is a tripod (2) formed from a main leg (3), surmounted by a top (4), and two secondary legs (5) which are mounted pivoting relative to said top (4) between a first spread-out service position and a second folded-up position in which the two secondary legs (5) are substantially parallel to the main leg (3); **in that** the main leg (3) and the support bar (7) are substantially in the same plane, and **in that** it includes an articulation part (6) capable of making the support bar (7) pivot relative to an axis (DD') perpendicular to said plane, said part (6) being fixed in the immediate vicinity of and above the top (4) of the tripod (2).

2. Support according to claim 1, **characterised in that** the top (4) of the tripod (2) includes a substantially planar face (43) which is opposite the main leg (3) and parallel to the general direction of said leg (3).

3. Support according to claim 2, **characterised in that** the top (4) of the tripod (2) is a part, the cross-section of which, perpendicularly with respect to the general direction of the main leg (3), is triangular, said part thus comprising three lateral faces (42, 43), **in that** the main leg (3) is disposed along one of the edges of the triangle and the pivoting axes of the two secondary legs (5) are disposed perpendicularly with respect to the two lateral faces (42) adjacent to the main leg (3).

4. Support according to one of claims 1 to 3, **characterised in that the** articulation part (6) comprises two jaws (61, 62), the periphery of which is circular and toothed, the teeth (63) of the one (61) coming to interlock with the teeth (63) of the other (62) when the two jaws are moved towards each other, and **in that** the first jaw (61) is fixed on the top (4) of the tripod (2) and the second jaw (62) is integral with the lower end (7a) of the support bar (7).

5. Support according to claim 4, **characterised in that** the lower end (7a) of the support bar (7) is provided with a threaded rod passing through the two jaws (61, 62) of the articulation part (6), said threaded rod cooperating with an adjusting nut (67) for the two jaws.

6. Support according to claim 3, **characterised in that** each of the two lateral faces (42) of the top (4) of the tripod (2) is provided with at least one stud (21), and **in that** each secondary leg (5) terminates in a circular portion (26), the face 26a of which, intended to come to rest on one of said lateral faces (42), is broken by at least one oblong slot (27) in which said stud (21) can move until it is stopped against the outer edges (28) of said slots (27).

## Patentansprüche

1. Fahrradständer, der ein Stativ und eine Trägerstange aufweist, deren unteres Ende mit dem Stativ eine Einheit bildet und die Auflagezonen für das Tretlager-Gehäuse des Fahrrades und für das diagonale Rohr des Rahmens aufweist, **dadurch gekennzeichnet, dass** das Stativ ein Dreibein (2) ist, das besteht aus einem Haupt-Standbein (3), auf dem ein Kopf (4) montiert ist, und zwei sekundären Standbeinen (5), die drehbar gegenüber dem Kopf (4) zwischen einer ersten ausgefahrenen Arbeits-Position und einer eingeschobenen zweiten Position schwenkbar montiert sind, wobei die beiden sekundären Standbeine (5) im Wesentlichen parallel zu dem Haupt-Standbein (3) verlaufen; dass das Haupt-Standbein (3) und die Trägerstange (7) im Wesentlichen in der gleichen Ebene liegen und dass er ein Gelenkelement (6) aufweist, mit dem die Trägerstange (7) gegenüber einer Achse (DD') senkrecht zu der Ebene verschwenkt werden kann, wobei das Gelenkelement (6) in unmittelbarer. Nähe und oberhalb des Kopfes (4) des Dreibeins (2) fixiert ist.

2. Ständer nach Anspruch 1, **dadurch gekennzeichnet, dass** der Kopf (4) des Dreibeins (2) eine im Wesentlichen ebene Fläche (43) aufweist, die dem Haupt-Standbein (3) gegenüberliegt und parallel zur allgemeinen Richtung des Standbeins (3) verläuft.

3. Ständer nach Anspruch 2, **dadurch gekennzeichnet, dass** der Kopf (4) des Dreibeins (2) ein Element darstellt, dessen Querschnitt senkrecht zur allgemeinen Richtung des Haupt-Standbeins (3) dreieckig ist, sodass dieses Element drei Seitenflächen (42, 43) aufweist, dass das Haupt-Standbein (3) an einer der drei Spitzen des Dreieckes befestigt ist und dass die Schwenkachsen der beiden sekundären Standbeine (5) senkrecht zu den beiden Seitenflächen (2) benachbart zu dem Haupt-Standbein (3) angeordnet sind.

4. Ständer nach einem der Ansprüche 1 bis 3, **dadurch gekennzeichnet, dass** das Gelenkstück (6) zwei Klemmbacken (61, 62) aufweist, deren Umfang kreisförmig und gezahnt ist, wobei die Zähne (63) der einen Klemmbacke (61) in die Zähne (63) der anderen Klemmbacke (62) eingreifen, wenn die beiden Klemmbacken (61, 62) einander genähert werden, dass die erste Klemmbacke (61) auf dem Kopf (4) des Dreibeins (2) fixiert ist und die zweite Klemmbacke (62) mit dem unteren Ende (7a) der Trägerstange (7) eine Einheit bildet.

5. Ständer nach Anspruch 4, **dadurch gekennzeichnet, dass** das untere Ende (7a) der Trägerstange (7) mit einer Gewindestange ausgestattet:ist, welche die beiden Klemmbacken (61, 62) des Gelenkelements (6) durchquert, wobei die Gewindestange mit einer Stellmutter (67) der beiden Klemmbacken cooperiert.

6. Ständer nach Anspruch 3, **dadurch gekennzeichnet, dass** jede der beiden Seitenflächen (42) des Kopfes (4) des Dreibeins (2) mit mindestens einem Knopf (21) ausgestattet ist, dass jedes sekundäre Standbein (5) durch einen kreisförmigen Abschnitt (26) abgeschlossen ist, dessen Fläche 26a, die auf einer der genannten Seitenflächen (42) zur Auflage kommen soll, mindestens eine Langloch-Ausnehmung (27) aufweist, in der der Knopf (21) verschoben werden kann, bis er an den äußeren Rändern (28) der Langlöcher (27) zum Anschlag kommt.
